# EUROPÄISCHE PATENTSCHRIFT

(11) **EP 4 234 164 B1**
(45) Veröffentlichungstag und Bekanntmachung des Hinweises auf die Patenterteilung: **08.10.2025**
(21) Anmeldenummer: 23174563.9
(22) Anmeldetag: 25.10.2017
(51) Int. Cl.: B24B 5/01, B24B 15/00, B24B 5/44, B24D 5/16, B24D 7/16

(54) **REINIGUNGSVORRICHTUNG**
CLEANING DEVICE
DISPOSITIF DE NETTOYAGE

(30) Priorität: 31.10.2016 DE 102016221406
(43) Veröffentlichungstag der Anmeldung: 30.08.2023
(62) Teilanmeldung aus: 17198354.7
(73) Patentinhaber: Müller, Michael, 96231 Bad Staffelstein (DE)
(72) Erfinder: Müller, Michael, 96231 Bad Staffelstein (DE)
(74) Vertreter: Paustian & Partner Patentanwälte mbB

(56) Entgegenhaltungen:
- EP-A1- 0 242 174
- DE-U1- 202015 001 308
- US-A- 152 442
- US-A- 2 978 846

## Beschreibung

Die Erfindung betrifft einen Reinigungskörper zum Reinigen und/oder Polieren einer eine Öffnung aufweisenden Oberfläche, wie beispielsweise einer Radfelgen-Anlagefläche eines Kraftfahrzeuges oder dergleichen.

Obwohl auf beliebige Oberflächen anwendbar, werden die vorliegende Erfindung sowie die ihr zugrunde liegende Problematik in Bezug auf einen Reinigungsvorgang einer Radfelgen-Anlagefläche eines Kraftfahrzeuges näher erläutert.

Beim Wechseln von Kraftfahrzeugrädern, beispielsweise von Sommer- auf Winterreifen oder umgekehrt, werden die Kraftfahrzeugradfelgen für eine Verbindung mit der Antriebswelle mit einer Kraftfahrzeugradnabe verbunden. Dabei dient eine nach außen weisende Flanschfläche der Kraftfahrzeugradnabe als Anlage für einen inneren Felgenabschnitt. Eine von diesem Flansch hervorstehende Achse ist dabei in Eingriff mit einer in der Kraftfahrzeugfelge vorgesehenen Aufnahme bringbar. Beim Wechseln eines Kraftfahrzeugrads sollte vor einem Aufsetzen des neuen Rades der innere Felgenabschnitt von Ablagerungen, Rostoxidationen, Verunreinigungen oder dergleichen mittels Reinigen und/oder Polieren gesäubert werden, um ein flächiges Aufsetzen der Felge auf der zugeordneten Flanschfläche zu gewährleisten.

Bekannte Reinigungsvorrichtungen sind nicht in der Lage bei einer Reinigung einer Radfelgen-Anlagefläche ein Verrutschen der Reinigungsvorrichtung in geeigneter Weise zu verhindern, so dass Schädigungen der Radfelge sowie des Werkzeugs insbesondere bei hohem Anpressdruck auftreten können.

Die Druckschrift DE US 152 442 A beschreibt ein Werkzeug zum Schleifen und Polieren von Marmor oder anderen Steinen.

Der Erfindung liegt die Aufgabe zugrunde, einen Reinigungskörper der eingangs genannten Gattung verfügbar zu machen, bei der ein schadfreies Reinigen und/oder Polieren einer Radfelgen-Anlagefläche erreicht werden kann.

Erfindungsgemäß wird diese Aufgabe durch den Reinigungskörper mit den im Patentanspruch 1 genannten Merkmalen gelöst. Bevorzugte Merkmale, welche die Erfindung vorteilhaft weiterbilden, sind in den nachgeordneten Patentansprüchen angegeben.

Die der vorliegenden Erfindung zugrundeliegende Idee ist durch die Merkmale des Anspruchs 1 wiedergegeben.

Somit weist die vorliegende Erfindung gegenüber den herkömmlichen Vorrichtungen den Vorteil auf, dass mittels des Zentrierzapfens, welcher in die Lageröffnung der Felge einführbar ist, bei einer Reinigung einer Radfelgen-Anlagefläche ein exzentrisches Verrutschen der Reinigungsvorrichtung in geeigneter Weise verhindert wird, so dass keinerlei Schädigungen der Radfelge sowie des Werkzeugs insbesondere bei hohem Anpressdruck auftreten können.

Gemäß einem Ausführungsbeispiel der vorliegenden Erfindung ist der Zentrierzapfen ebenfalls von dem Reinigungsmittel bedeckt. Somit weist die vorliegende Erfindung gegenüber den herkömmlichen Vorrichtungen den Vorteil auf, dass bei beispielsweise einer Reinigung einer Radfelge eines Kraftfahrzeuges nicht nur die flächige Felgenanlagefläche von Rostoxidationen und Verunreinigungen gereinigt wird, sondern auch die Innenseite des Felgendurchbruchs mittels des vorgesehenen Zentrierzapfens mit aufgebrachtem Reinigungsmittel von Rostoxidationen und Verunreinigungen gereinigt wird.

Gemäß einem weiteren Ausführungsbeispiel der vorliegenden Erfindung weist der Zentrierzapfen eine kreisrunde, polygonale oder mehrkantige Querschnittsform oder dergleichen auf.

Gemäß einem weiteren Ausführungsbeispiel der vorliegenden Erfindung weist der Befestigungsabschnitt einen Randabschnitt für eine Zentrierung des aufgenommenen Reinigungskörpers auf.

Gemäß einem weiteren Ausführungsbeispiel der vorliegenden Erfindung ist das Reinigungsmittel als rauhes Schleifmittel ausgebildet.

Gemäß einem weiteren Ausführungsbeispiel der vorliegenden Erfindung ist das Reinigungsmittel mittels einer Klebeverbindung oder dergleichen fest an der Stabilisierungsplatte und/oder dem Zentrierzapfen angebracht.

Gemäß einem weiteren Ausführungsbeispiel der vorliegenden Erfindung weist der Befestigungsabschnitt die Stabilisierungsplatte und der Zentrierzapfen jeweils einen vorzugsweise miteinander fluchtenden mittigen Durchbruch für die Aufnahme einer Welle, Achse oder dergleichen auf.

Gemäß einem weiteren Ausführungsbeispiel der vorliegenden Erfindung ist die Reinigungsvorrichtung mit einer Verdrehsicherung in Form einer Kante oder eines Mehrkants ausgebildet.

Gemäß einem weiteren Ausführungsbeispiel der vorliegenden Erfindung ist das Gehäuse aus Polyoxymethylen, POM, Aluminium oder dergleichen ausgebildet.

Ausführungsbeispiele der Erfindung sind in den Zeichnungen dargestellt und in der nachfolgenden Beschreibung näher erläutert.

In den Figuren zeigen:
- Fig. 1: eine Seitenansicht eines Gehäuse einer Reinigungsvorrichtung ;
- Fig. 2: eine Schnittansicht des Gehäuses von Fig. 1 entlang der Linie A-A; und
- Fig. 3: eine Perspektivansicht eines Reinigungskörpers gemäß einem Ausführungsbeispiel der vorliegenden Erfindung.

In den Figuren bezeichnen gleiche Bezugszeichen gleiche oder funktionsgleiche Komponenten.

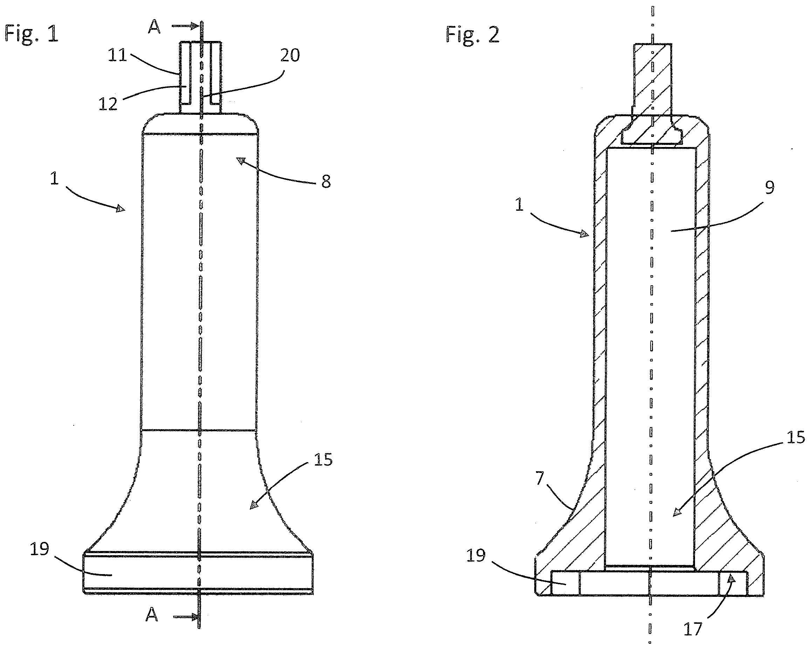

Unter Bezugnahme zunächst auf die Figuren 1 und 2 wird eine Reinigungsvorrichtung 1 gemäß einem Ausführungsbeispiel der vorliegenden Erfindung erläutert. Fig. 1 illustriert eine Seitenansicht eines Gehäuses einer Reinigungsvorrichtung gemäß einem Ausführungsbeispiel der vorliegenden Erfindung und Fig. 2 eine Schnittansicht des Gehäuses von Fig. 1 entlang der Linie A-A.

Die Reinigungsvorrichtung 1 weist gemäß dem Ausführungsbeispiel, wie in Fig. 1 und 2 ersichtlich ist, ein glockenförmiges Gehäuse 7 auf. Das Gehäuse 7 kann auch topfförmig, kegelförmig oder dergleichen ausgebildet sein und besteht vorzugsweise aus Polyoxymethylen (POM), Aluminium oder dergleichen. Selbstverständlich sind andere Materialien und Formen mit entsprechenden Eigenschaften ebenfalls vorstellbar.

Das Gehäuse 7 weist einen hinteren Drehabschnitt 8 für eine Rotation des Gehäuses 7 um eine Rotationsachse 20 und einen vorderen Ausnehmungsabschnitt 15 für eine Aufnahme einer vorstehenden Achse oder Welle (nicht dargestellt) auf, der um eine Rotationsachse 20 des Gehäuses 7 angeordnet ist.

Der hintere Drehabschnitt 8 ist derart ausgebildet, dass er eine glatte und für einen Handbetrieb bzw. für eine Handführung leicht greifbare Oberfläche 9 aufweist. Ferner ist gemäß dem vorliegenden Ausführungsbeispiel am hinteren Ende des hinteren Drehabschnitts 8 ein Antriebsschaft 11 vorgesehen, der koaxial mit der Rotationsachse 20 verläuft. Der Antriebsschaft 11 kann einteilig mit dem Gehäuse 7, beispielsweise mittels eines Spritzgussverfahrens, ausgebildet sein oder mittels einer Schraubverbindung (nicht dargestellt) mit dem Gehäuse 7 verbunden sein.

Der Antriebsschaft 11 weist vorzugsweise an dem dem Gehäuse 7 abgewandten Ende einen Mehrkantschaft 12, vorzugsweise einen Sechskantschaft 12, für beispielsweise einen Eingriff in ein Bohrfutter einer Bohrmaschine für einen maschinengesteuerten Drehantrieb auf. Alternativ kann der Antriebsschaft 11 auch eine Gewindemutter oder ein Innengewinde zum Antrieb durch Maschinen oder auch ein polygonales Innenprofil aufweisen.

Der vordere Ausnehmungsabschnitt 15 weist beispielsweise einen runden Querschnitt auf, der einen an die aufzunehmende vorstehende Welle bzw. Achse angepassten Durchmesser besitzt, d.h. der Durchmesser des Ausnehmungsabschnitts 15 ist mindestens so groß wie der Durchmesser der aufzunehmenden Achse bzw. Welle.

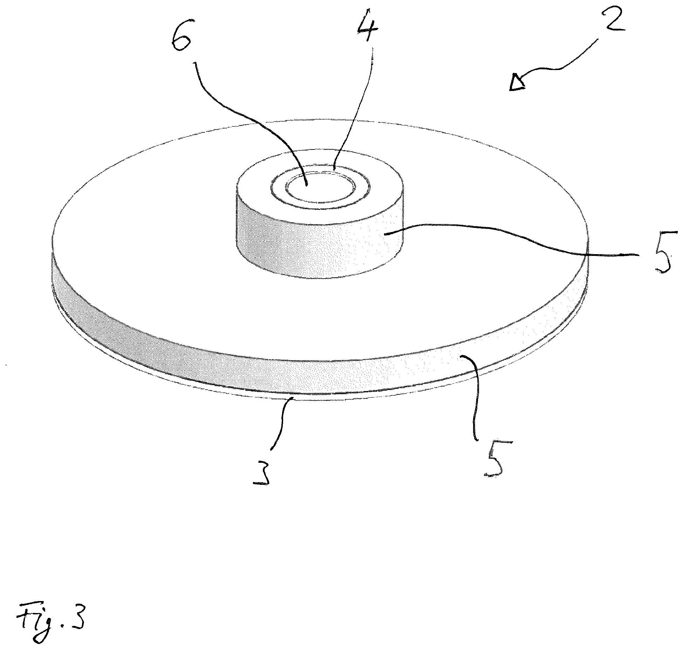

Das Gehäuse 7 weist ferner im vorderen Bereich einen Befestigungsabschnitt 17 auf, der konzentrisch zum Ausnehmungsabschnitt 15 für eine Befestigung eines Reinigungskörpers 2, wie in Fig. 3 illustriert, angeordnet ist. Der Befestigungsabschnitt 17 ist von einem überstehenden Randabschnitt 19 für eine Zentrierung des aufgenommenen Reinigungskörpers umgeben, wie in den Fig. 1 und 2 gezeigt ist. Der Randabschnitt 19 ist beispielsweise in der Art eines Mehrkants 25 ausgebildet, welcher hier als ein Achtkant ausgebildet ist. Er kann auch mit einem Absatz und/oder einer radial zur Rotationsachse 20 geneigten Anlagefläche für einen komplementär ausgebildeten Befestigungsabschnitt (nicht dargestellt) des Reinigungskörpers versehen sein.

Der Randabschnitt 19 erstreckt sich bei einer Flanschfläche, die einen Durchmesser aufweist, der kleiner, gleich oder größer als der Durchmesser der Reinigungskörperfläche ist, vorzugsweise für eine vollständige und stabilisierte Aufnahme des Reinigungskörpers 2 über den Umfangsrand des Reinigungskörpers hinaus, schließt mit diesem bündig ab oder ist mit einem im Durchmesser passenden Absatzabschnitt an dem durchmessergrößeren Reinigungskörper befestigt.

Der Befestigungsabschnitt 17 ist an der Oberseite zumindest teilweise mit einem Befestigungsmittel (nicht dargestellt), beispielsweise einem Klettverschluss für eine lösbare Befestigung des Reinigungskörpers 2, einem Klebeverschluss oder einem anderen einer kraft- und/oder formschlüssigen Verbindung dienenden Mittel ausgebildet.

Der Benutzer verbindet bei Inbetriebnahme das Befestigungsmittel des Reinigungskörpers 2 und das zugeordnete Befestigungsmittel des Befestigungsabschnitts 17 des Gehäuses 7 derart miteinander, dass der Reinigungskörper 2 auf dem Befestigungsabschnitt 17 des Gehäuses 7 zur befestigten Anlage kommt. Dabei dient der vorstehende Randabschnitt 19 des Gehäuses 7 einer Zentrierung des Reinigungskörpers2 und der Mehrkant 25 dient als eine formschlüssige Verdrehsicherung des Reinigungskörpers 2 an dem Gehäuse 7.

Der Befestigungsabschnitt 17 kann zur Verbesserung der Aufnahme radialer Kräfte auch dahingehend modifiziert sein, dass der vorstehende Randabschnitt 19 materialverstärkt und/oder mit einer geneigten Anlagefläche radial zur Rotationsachse ausgebildet ist.

Die Reinigungsvorrichtung 1 kann für einen Reinigungsvorgang entweder manuell oder maschinengesteuert um die Rotationsachse 20 gedreht werden. Dabei kann der mit einem Mehrkantschaft 12 ausgebildete Antriebsschaft 11 bei einem maschinengesteuerten Antrieb in ein Bohrfutter beispielsweise einer Bohrmaschine oder dergleichen eingesetzt werden.

Der Reinigungskörper 2 kann im Falle einer lösbaren Klettverschlussverbindung mit dem Gehäuse 7 manuell von dem Befestigungsabschnitt 17 auf einfache Weise demontiert und ersetzt werden.

Fig. 3 illustriert eine Perspektivansicht eines beispielhaften Reinigungskörpers 2 der Reinigungsvorrichtung 1 gemäß einem Ausführungsbeispiel der vorliegenden Erfindung. Wie in Figur 3 ersichtlich ist, weist der Reinigungskörper 2 vorzugsweise eine scheibenförmige Stabilisierungsplatte 3 und einen daran mittig angeformten Zentrierzapfen 4 auf. Der Zentrierzapfen 4 springt vorzugsweise von der Stabilisierungsplatte 3 in der gehäuseabgewandten Richtung mittig vor. der Zentrierzapfen 4 weist vorzugsweise eine kreisrunde Querschnittsform auf. Es ist allerdings für einen Fachmann offensichtlich, dass auch eine andersartige geometrische Ausgestaltung des Zentrierzapfens 4 möglich ist, beispielsweise eine polygonale oder andersartig mehrkantige Querschnittsform oder dergleichen.

Beispielsweise können die Stabilisierungsplatte 3 und der Zentrierzapfen 4 einteilig miteinander ausgebildet sein. Es ist allerdings für einen Fachmann offensichtlich, dass auch eine andersartige Ausgestaltung möglich ist.

Des weiteren weist sowohl die Stabilisierungsplatte 3 als auch der mittig angeordnete Zentrierzapfen 4 einen mittigen Durchbruch 6 auf, wobei diese Durchbrüche 6 vorzugsweise miteinander fluchten, um etwaige Achsen, Lager oder Wellen aufnehmen zu können..

Die vorgesehenen geometrischen Abmessungen und Materialien der Stabilisierungsplatte 3 sowie des Zentrierzapfens 4 sind entsprechend den jeweiligen Anwendungen und des jeweilig verwendeten Gehäuses 7 auswählbar. Insbesondere die Höhe und der Durchmesser der Stabilisierungsplatte 3 sowie des Zentrierzapfens 4 sind entsprechend modifizierbar.

Die dem Gehäuse 7 abgewandte Oberfläche der Stabilisierungsplatte 3 sowie die äußere Umfangsfläche des Zentrierzapfens 4 sind gemäß dem vorliegenden Ausführungsbeispiel mit einem Reinigungsmittel 5 versehen. Das Reinigungsmittel 5 ist beispielsweise als rauhes Schleifmaterial oder dergleichen ausgebildet. Die genaue Materialausgestaltung sowie die genaue geometrische Abmessung, insbesondere die Dicke des Schleifenmaterials, kann wiederum dem jeweiligen Anwendungsfall entsprechend angepasst werden.

Beispielsweise wird das Schleifmittel 5 auf den jeweils zugeordneten Oberflächen der Stabilisierungsplatte 3 sowie des Zentrierzapfens 4 verklebt. Es ist für einen Fachmann offensichtlich, dass auch andere Anbringungsmöglichkeiten verwendet werden können.

Somit weist die vorliegende Erfindung gegenüber den herkömmlichen Vorrichtungen den Vorteil auf, dass mittels des Zentrierzapfens, welcher in die Lageröffnung der Felge einführbar ist, bei einer Reinigung einer Radfelgen-Anlagefläche ein exzentrisches Verrutschen der Reinigungsvorrichtung in geeigneter Weise verhindert wird, so dass keinerlei Schädigungen der Radfelge sowie des Werkzeugs insbesondere bei hohem Anpressdruck auftreten können, und dass bei beispielsweise einer Reinigung einer Felgeninnenseite eines Kraftfahrzeuges nicht nur die flächige Felgenanlagefläche von Rostoxidationen und Verunreinigungen gereinigt wird, sondern auch die Innenseite des Felgendurchbruchs bzw. der Lageröffnung mittels des vorgesehenen Zentrierzapfens 4 mit aufgebrachtem Reinigungsmittel 5 von Rostoxidationen und Verunreinigungen gereinigt wird.

Ist nun das Reinigen einer Gegenanlagefläche mit vorspringender Achse oder Welle vorgesehen, kann auf einfache Art und Weise der Reinigungskörper 2 von dem Gehäuse 7 der Vorrichtung 1 entfernt und durch einen andersartig ausgestalteten Reinigungskörper ersetzt werden, welcher beispielsweise ohne einem derartigen Zentrierzapfen 4 ausgebildet ist.

Obwohl die vorliegende Erfindung anhand bevorzugter Ausführungsbeispiele vorliegend beschrieben wurde, ist diese darauf nicht beschränkt, sondern auf vielfältige Art und Weise modifizierbar, wie in den Ansprüchen definiert.

### Bezugszeichenliste

- 1: Reinigungsvorrichtung
- 2: Reinigungskörper
- 3: Stabilisierungsplatte
- 4: Zentrierzapfen
- 5: Reinigungsmittel
- 6: mittiger Durchbruch
- 7: Gehäuse
- 8: hinterer Drehabschnitt
- 9: Oberfläche
- 11: Antriebsschaft
- 12: Mehrkantschaft
- 15: Ausnehmungsabschnitt
- 17: Befestigungsabschnitt
- 19: Randabschnitt
- 20: Rotationsachse

## Patentansprüche

1. Reinigungskörper (2) für eine Reinigungsvorrichtung (1) zum Reinigen und/oder Polieren einer eine Öffnung aufweisenden Oberfläche, wie beispielsweise einer Radfelgen-Anlagefläche eines Kraftfahrzeuges, wobei der Reinigungskörper (2) eine bei Gebrauch einem Gehäuse (7) der Reinigungsvorrichtung (1) zugewandte Stabilisierungsplatte (3), welche einen bei Gebrauch dem Gehäuse (7) abgewandten und zentrisch vorstehenden Zentrierzapfen (4) aufweist, und ein die bei Gebrauch dem Gehäuse (7) abgewandte Oberfläche der Stabilisierungsplatte (3) bedeckendes Reinigungsmittel (5) aufweist;
**dadurch gekennzeichnet,**
**dass** die Stabilisierungsplatte (3) und der Zentrierzapfen (4) jeweils einen miteinander fluchtenden mittigen Durchbruch (6) für die Aufnahme einer Welle oder Achse aufweisen.

2. Reinigungskörper nach Anspruch 1,
**dadurch gekennzeichnet,**
**dass** die äußere Umfangsfläche des Zentrierzapfens (4) ebenfalls mit dem bedeckenden Reinigungsmittel (5) ausgebildet ist.

3. Reinigungskörper nach Anspruch 1 oder 2,
**dadurch gekennzeichnet,**
**dass** der Zentrierzapfen (4) eine kreisrunde, polygonale oder mehrkantige Querschnittsform oder dergleichen aufweist.

4. Reinigungskörper nach einem der Ansprüche 1 bis 3,
**dadurch gekennzeichnet,**
**dass** das Reinigungsmittel (5) als Schleifmittel ausgebildet ist.

5. Reinigungskörper nach einem der Ansprüche 1 bis 4,
**dadurch gekennzeichnet,**
**dass** das Reinigungsmittel (5) mittels einer Klebeverbindung fest an der Stabilisierungsplatte (3) und/oder dem Zentrierzapfen (4) angebracht ist.

## Claims

1. Cleaning body (2) for a cleaning device (1) for cleaning and/or polishing a surface having an opening, such as a wheel rim contact surface of a motor vehicle, wherein the cleaning body (2) has a stabilizing plate (3) facing a housing (7) of the cleaning device (1) during use, which has a centering pin (4) that protrudes centrally and faces away from the housing (7) during use, and a cleaning agent (5) that covers the surface of the stabilizing plate (3) that faces away from the housing (7) during use; **characterized in that** the stabilizing plate (3) and the centering pin (4) each have a central opening (6) aligned with each other for receiving a shaft or axle.

2. Cleaning body according to claim 1, **characterized in that** the outer peripheral surface of the centering pin (4) is also formed with the covering cleaning agent (5).

3. Cleaning body according to claim 1 or 2, **characterized in that** the centering pin (4) has a circular, polygonal or multi-sided cross-sectional shape or the like.

4. Cleaning body according to one of claims 1 to 3, **characterized in that** the cleaning agent (5) is formed as an abrasive.

5. Cleaning body according to one of claims 1 to 4, **characterized in that** the cleaning agent (5) is firmly attached to the stabilizing plate (3) and/or the centering pin (4) by means of an adhesive bond.

## Revendications

1. Elément de nettoyage (2) pour un dispositif de nettoyage (1) destiné à nettoyer et/ou polir une surface présentant une ouverture, telle que par exemple une surface d'appui de jante de roue d'un véhicule automobile, l'élément de nettoyage (2) comportant une plaque de stabilisation (3) tournée, lors de l'utilisation, vers un boîtier (7) du dispositif de nettoyage (1), qui présente un tenon de centrage (4) qui, lors de l'utilisation, est opposé au boîtier (7) et fait saillie de manière centrée, et un produit de nettoyage (5) recouvrant la surface de la plaque de stabilisation (3) qui, lors de l'utilisation, est opposée au boîtier (7) ; **caractérisé en ce que** la plaque de stabilisation (3) et le tenon de centrage (4) présentent chacun une ouverture centrale (6) alignée avec l'autre pour recevoir un arbre ou un axe.

2. Elément de nettoyage selon la revendication 1, **caractérisé en ce que** la surface périphérique extérieure du tenon de centrage (4) est également formée avec le moyen de nettoyage (5) qui la recouvre.

3. Elément de nettoyage selon la revendication 1 ou 2, **caractérisé en ce que** le tenon de centrage (4) présente une forme de section transversale circulaire, polygonale ou polygonale ou similaire.

4. Elément de nettoyage selon l'une des revendications 1 à 3, **caractérisé en ce que** le produit de nettoyage (5) est conçu comme un abrasif.

5. Elément de nettoyage selon l'une des revendications 1 à 4, **caractérisé en ce que** le produit de nettoyage (5) est fixé solidement à la plaque de stabilisation (3) et/ou au tenon de centrage (4) au moyen d'une liaison adhésive.
